# EUROPEAN PATENT APPLICATION

(11) **EP 1 739 963 A1**
(43) Date of publication of application: **03.01.2007**
(21) Application number: 06115441.5
(22) Date of filing: 14.06.2006
(51) Int. Cl.: H04N 5/45, H04N 5/92

(54) **Information playback apparatus and information playback method**

(30) Priority: 30.06.2005 JP 2005192982
(71) Applicant: KABUSHIKI KAISHA TOSHIBA, Tokyo 105-8001 (JP)
(72) Inventor: Suzuki, Nobuyuki Toshiba Corporation, Minato-ku Tokyo 105-8001 (JP)
(74) Representative: Henkel, Feiler & Hänzel

(57) **Abstract**

An information playback apparatus comprises input units (261, 262) to which a plurality of streams (1, 2) each including video and audio are inputted, a selection unit (17, 21, 23) which selects a predetermined stream from the plurality of inputted streams (1, 2), and a synchronous playback unit (27 to 47) which, by using an audio playback time of the selected stream as a master, synchronously plays back video of the selected stream and video and audio of a non-selected stream.

## Description

The present invention relates to an information playback apparatus and an information playback method for synchronously playing back a plurality of streams including video and audio.

As is well known, in an accumulation medium player that reads from a storage medium such as an optical disk, for example, a digital versatile disk (DVD) a single stream including video and audio that is stored in the storage medium and plays back the stream, the video and audio are synchronously played back by using a preset system time clock (STC) as a master.

On the other hand, in recent years, an information playback apparatus has been developed which is capable of accepting as input a plurality of streams each including video and audio, and synchronously playing back, with respect to video and audio in a main stream selected from the inputted streams, video and audio in other streams.

In such an information playback apparatus, an STC serving as a master needs to be set according to a main stream to which other streams are synchronized; otherwise, video in the main stream which is being displayed may be skipped or audio may be interrupted, giving a discomfort feeling to a user who is viewing and listening.

Jpn. Pat. Appln. KOKAI Publication No. 2002-281445 discloses the following configuration. That is, playback time management information (PTS) on each coded data on video and audio is compared with a preset STC to detect synchronous and asynchronous states, and allowance for decoding is sent in a synchronous state and disallowance for decoding is sent in an asynchronous state to a decoding processing unit. Thereby, synchronization shift between video and audio or playback interruption due to transmission path error is reduced.

The present invention has been made in view of the foregoing and other problems. An object of the present invention is to provide an information playback apparatus and an information playback method that are capable of synchronously playing back a plurality of streams without making the user feel discomfort with video and audio.

According to one aspect of the present invention, there is provided an information playback apparatus comprising: input units configured to receive a plurality of streams each including video and audio; a selection unit configured to select a predetermined stream from the plurality of streams inputted to the input units; and a synchronous playback unit configured to, by using an audio playback time of the stream selected by the selection unit as a master, synchronously plays back video of the selected stream and video and audio of a non-selected stream.

According to another aspect of the present invention, there is provided an information playback method comprising: a first step of inputting a plurality of streams each including video and audio; a second step of selecting a predetermined stream from the plurality of streams inputted in the first step; and a third step of, by using an audio playback time of the stream selected in the second step as a master, synchronously playing back video of the selected stream and video and audio of a non-selected stream.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an illustrative block configuration diagram schematically showing an information playback apparatus according to an embodiment of the present invention;
FIG. 2 is an illustrative block configuration diagram showing the details of a decoding processing unit of the information playback apparatus according to the embodiment;
FIGS. 3 and 4 are illustrative diagrams each showing exemplary display video in the embodiment, for the case in which a main stream is switched;
FIG. 5 is a flowchart showing a synchronous playback operation of the information playback apparatus according to the embodiment; and
FIG. 6 is an illustrative view showing an exemplary main stream selection screen which is displayed on the information playback apparatus according to the embodiment.

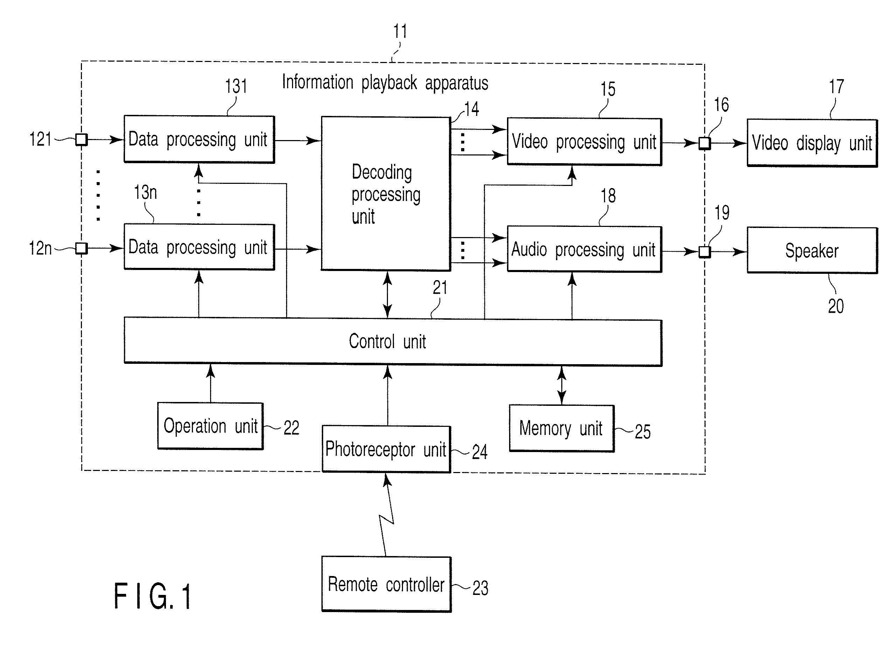

An embodiment of the present invention will be described in detail below with reference to the drawings. FIG. 1 is a schematic diagram of an information playback apparatus 11 which is described in the present embodiment. Specifically, the information playback apparatus 11 has a plurality of input terminals 121 to 12n.

To the input terminals 121 to 12n, there are inputted streams each including video and audio, such as streams played back from a storage medium such as a DVD, streams obtained by receiving broadcasting, and streams obtained through a network.

The streams inputted to the input terminals 121 to 12n are supplied to data processing units 131 to 13n, respectively, and subjected to predetermined data processing such as a format adjustment, and then, the processed streams are supplied to a decoding processing unit 14.

The decoding processing unit 14 separates each inputted stream into a video signal and an audio signal. Then, the decoding processing unit 14 performs a decoding process on each of the separated video signals and outputs the decoded video signals to a video processing unit 15.

The video processing unit 15 combines the inputted video signals according to a video display form that is requested by the user, and supplies the combined video signal to an external video display unit 17 through an output terminal 16, whereby the video is displayed.

In addition, the decoding processing unit 14 performs a decoding process on each of the separated audio signals and outputs the decoded audio signals to an audio processing unit 18. The audio processing unit 18 selects from the inputted audio signals an audio signal that is requested by the user, and supplies the selected audio signal to an external speaker 20 through an output terminal 19, whereby the audio is played back.

In the information playback apparatus 11, various operations including the aforementioned various playback operations are comprehensively controlled by a control unit 21. The control unit 21 is a microprocessor that incorporates a central processing unit (CPU) and the like. The control unit 21 receives operation information from an operation unit 22 or receives, through a photoreceptor unit 24, operation information sent from a remote controller 23, and thereby controls each unit such that the operation content is reflected.

In this case, the control unit 21 uses a memory unit 25. The memory unit 25 mainly includes a read only memory (ROM) having stored therein a control program which is executed by the CPU; a random access memory (RAM) that provides a work area to the CPU; and a nonvolatile memory in which various setting information, control information, and the like are stored.

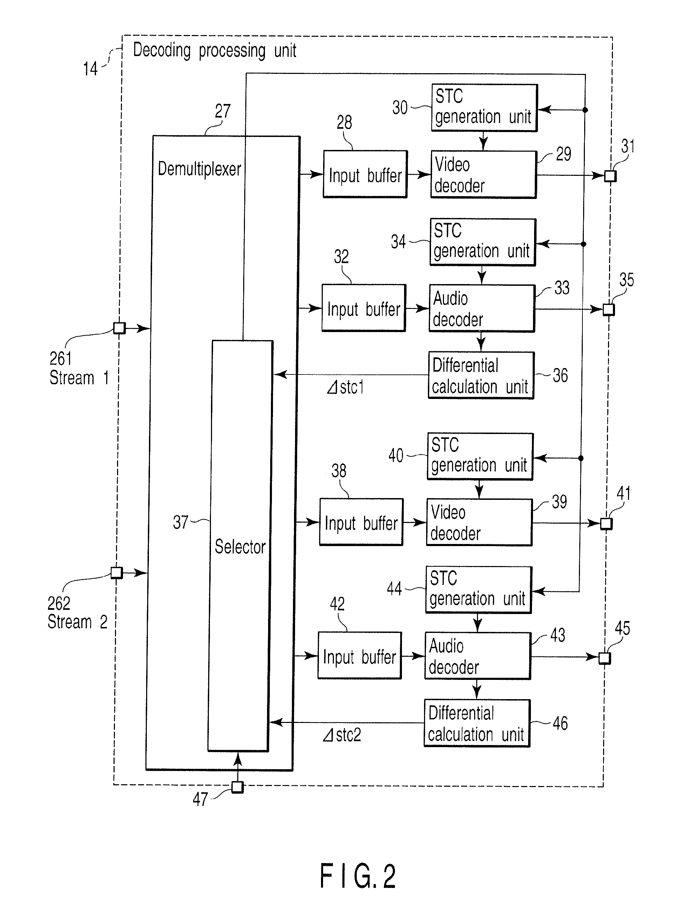

FIG. 2 is a diagram showing the details of the decoding processing unit 14. For simplicity, the decoding processing unit 14 of FIG. 2 is shown as one capable of accepting as input two streams. More specifically, the decoding processing unit 14 has first and second input terminals 261 and 262.

Streams 1 and 2 respectively inputted to the first and second input terminals 261 and 262 each are supplied to a demultiplexer 27 and separated into a video signal and an audio signal. The demultiplexer 27 outputs the video and audio signals separated from the streams 1 and 2, in a packetized elementary stream (PES) format having added thereto a presentation time stamp (PTS) which is information for managing the playback time of those signals.

Of the signals, a video signal separated from the stream 1 is supplied to a video decoder 29 through an input buffer 28, whereby the video signal is subjected to a decoding process. Then, the video decoder 29 compares an STC which is time information generated for system management from an STC generation unit 30 with a PTS included in the input video signal in the PES format, thereby determining the output timing of the decoded video signal, and the video decoder 29 then outputs the video signal to the video processing unit 15 through an output terminal 31.

An audio signal separated from the stream 1 is supplied to an audio decoder 33 through an input buffer 32, whereby the audio signal is subjected to a decoding process. Then, the audio decoder 33 compares an STC outputted from an STC generation unit 34 with a PTS included in the input audio signal in the PES format, thereby determining the output timing of the decoded audio signal, and the audio decoder 33 then outputs the audio signal to the audio processing unit 18 through an output terminal 35.

The PTS of the audio signal decoded by the audio decoder 33 and the STC outputted from the STC generation unit 34 are supplied to a differential calculation unit 36, and a differential Δstc1 between the PTS and the STC is calculated. The differential Δstc1 is supplied to one input terminal of a selector 37 incorporated in the demultiplexer 27.

A video signal separated from the stream 2 is supplied to a video decoder 39 through an input buffer 38, whereby the video signal is subjected to a decoding process. Then, the video decoder 39 compares an STC outputted from an STC generation unit 40 with a PTS included in the input video signal in the PES format, thereby determining the output timing of the decoded video signal, and the video decoder 39 then outputs the video signal to the video processing unit 15 through an output terminal 41.

An audio signal separated from the stream 2 is supplied to an audio decoder 43 through an input buffer 42, whereby the audio signal is subjected to a decoding process. Then, the audio decoder 43 compares an STC outputted from an STC generation unit 44 with a PTS included in the input audio signal in the PES format, thereby determining the output timing of the decoded audio signal, and the audio decoder 43 then outputs the audio signal to the audio processing unit 18 through an output terminal 45.

The PTS of the audio signal decoded by the audio decoder 43 and the STC outputted from the STC generation unit 44 are supplied to a differential calculation unit 46, and a differential Δstc2 between the PTS and the STC is calculated. The differential Δstc2 is supplied to the other input terminal of the selector 37 incorporated in the demultiplexer 27.

Based on a select signal which is supplied from the control unit 21 through a control terminal 47, the selector 37 supplies either one of the differentials Δstc1 and Δstc2 supplied to the two input terminals, to each of the STC generation units 30, 34, 40, and 44.

The STC generation units 30, 34, 40, and 44 each function to provide, as an offset, the one of the differentials Δstc1 and Δstc2 supplied from the selector 37, to the STCs generated therefrom respectively.

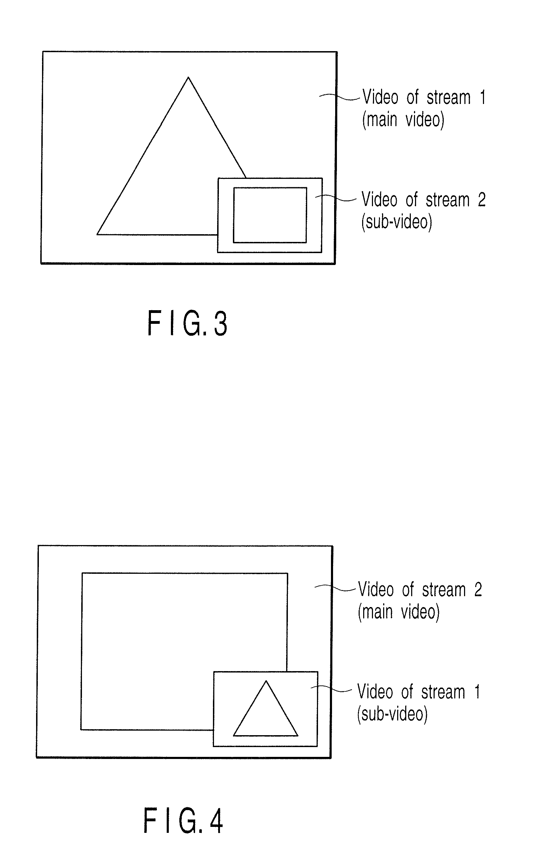

Now, the synchronous playback of the streams 1 and 2 will be explained. In this case, when the stream 1 is selected as a main stream and the stream 2 is synchronized to the stream 1, multi-screen display is provided on the video display unit 17 such that the video of the stream 1 is a main video and the video of the stream 2 is a sub-video, as shown in FIG. 3. At this time, the audio of the stream 1 is played back from the speaker 20.

Alternatively, when the stream 2 is selected as a main stream and the stream 1 is synchronized to the stream 2, multi-screen display is provided on the video display unit 17 such that the video of the stream 2 is a main video and the video of the stream 1 is a sub-video, as shown in FIG. 4. At this time, the audio of the stream 2 is played back from the speaker 20.

A selection of which one of the streams 1 and 2 to use as a main stream, i.e., a selection of a main stream, can be easily made by the user operating a switching key or the like on the remote controller 23. The STC for the audio of either one of the streams 1 and 2 selected as the main stream serves as a master.

More specifically, as shown in FIG. 3, the STC for the audio of the stream 1 serves as a master when the stream 1 is selected as a main stream; and as shown in FIG. 4, the STC for the audio of the stream 2 serves as a master when the stream 2 is selected as a main stream.

Consequently, for example, when the stream 2 is selected as a main stream, the control unit 21 generates a select signal for controlling the selector 37 such that the differential Δstc2 outputted from the differential calculation unit 46 is supplied to the STC generation units 30, 34, 40, and 44. Thus, the STC generation units 30, 34, 40, and 44 each provide, as an offset, their respective differentials Δstc2 supplied from the selector 37 to the STCs generated therefrom, respectively.

The video decoder 29 compares the value of the STC to which the differential Δstc2 is provided as an offset and which is obtained from the STC generation unit 30, with a PTS of a video signal to be outputted next. If the STC advances over the PTS, a decoding process on a non-reference video signal is skipped. If the STC is delayed against the PTS, the value of the PTS can be adjusted to the STC by repeating a current output video. More specifically, the output timing of a video signal of the stream 1 can be synchronized to the output timing of an audio signal of the stream 2.

The video decoder 39 also compares the value of the STC to which the differential Δstc2 is provided as an offset and which is obtained from the STC generation unit 40, with a PTS of a video signal to be outputted next. If the STC advances over the PTS, a decoding process on a non-reference video signal is skipped. If the STC is delayed against the PTS, the value of the PTS can be adjusted to the STC by repeating a current output video. More specifically, the output timing of a video signal of the stream 2 can be synchronized to the output timing of an audio signal of the stream 2.

Furthermore, the audio decoder 33 compares the value of the STC to which the differential Δstc2 is provided as an offset and which is obtained from the STC generation unit 34, with a PTS of an audio frame to be outputted next. If the STC advances over the PTS, a decoding process on the audio frame is skipped. If the STC is delayed against the PTS, the value of the PTS can be adjusted to the STC by stopping a decoding process. More specifically, the output timing of an audio signal of the stream 1 can be synchronized to the output timing of an audio signal of the stream 2.

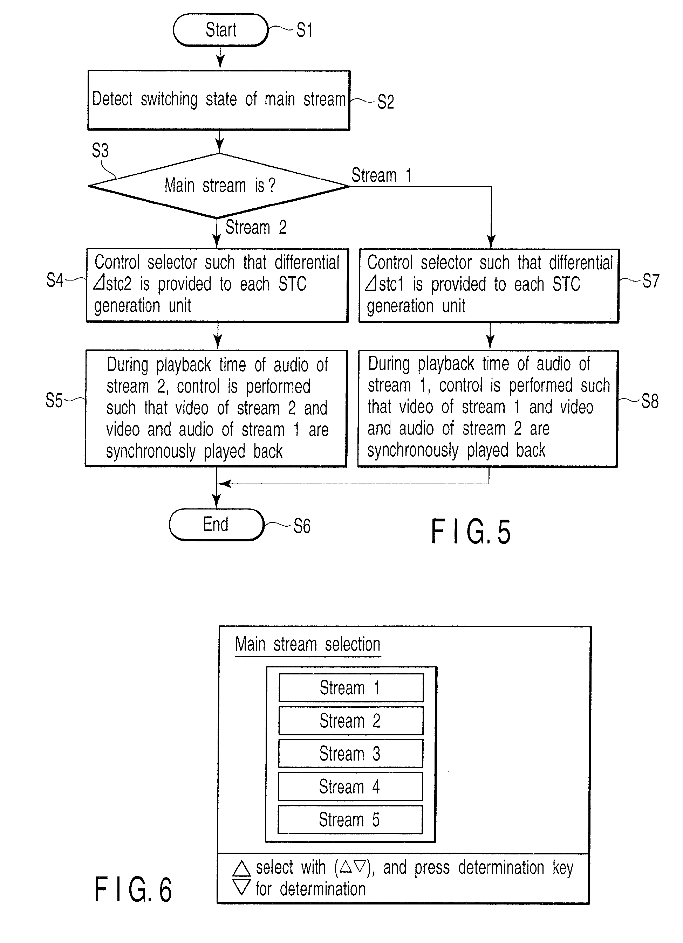

FIG. 5 is a flowchart in which the aforementioned synchronous playback operations are summarized. That is, when processing starts (step S1), the control unit 21 detects the switching state of a main stream in step S2, and determines whether the main stream is a stream 1 or 2 in step S3.

If it is determined that the main stream is the stream 2, the control unit 21 controls, in step S4, the selector 37 such that a differential Δstc2 outputted from the differential calculation unit 46 is supplied to the STC generation units 30, 34, 40, and 44.

Subsequently, in step S5, the video decoders 29 and 39 and the audio decoder 33 except for the audio decoder 43 that processes an audio signal of the stream 2 each compare the value of the STC to which the differential Δstc2 is provided as an offset, with a PTS of a signal to be outputted next, and perform an operation such that the value of the PTS is adjusted to the STC, whereby processing ends (step S6).

Consequently, during the playback time of the audio of the stream 2 which is the main stream, synchronous playback is performed such that the video of the stream 2 and the video and audio of the stream 1 which is a non-selected stream are synchronized.

If it is determined in step S3 that the main stream is the stream 1, the control unit 21 controls, in step S7, the selector 37 such that a differential Δstc1 outputted from the differential calculation unit 36 is supplied to the STC generation units 30, 34, 40, and 44.

Subsequently, in step S8, the video decoders 29 and 39 and the audio decoder 43 except for the audio decoder 33 that processes an audio signal of the stream 1 each compare the value of the STC to which the differential Δstc1 is provided as an offset, with a PTS of a signal to be outputted next, and perform an operation such that the value of the PTS is adjusted to the STC, whereby processing ends (step S6).

As a consequence, during the playback time of the audio of the stream 1 which is the main stream, synchronous playback is performed such that the video of the stream 1 and the video and audio of the stream 2 which is a non-selected stream are synchronized.

According to the aforementioned embodiment, when streams 1 and 2 are synchronously played back, an STC master is obtained from an audio of the main stream. Therefore, the streams 1 and 2 can be synchronously played back without making the user feel discomfort with video and audio.

Although the aforementioned embodiment describes the case in which two streams 1 and 2 are synchronously played back, the present invention is not limited thereto. Needless to say, even when three or more streams are synchronously played back, synchronous playback can be realized by obtaining an STC master from an audio of the main stream.

When there are three or more streams to be inputted, the user operates the remote controller 23 to display on the video display unit 17 a main stream selection screen such as the one shown in FIG. 6. Then, by selecting and determining a desired stream from a plurality of streams displayed on the main stream selection screen by operating the remote controller 23, the main stream can be set.

It is understood that the present invention is not restrictive to the above-described embodiment and can be embodied, at the stage of implementation, by making various changes to components without departing from the scope of the invention. In addition, by appropriately combining a plurality of components disclosed in the above-described embodiment, various inventions can be made. For example, from all components shown in the embodiment some of the components may be omitted. Furthermore, components according to another embodiment may be appropriately combined.

## Claims

1. An information playback apparatus **characterized by** comprising:
input units (261, 262) configured to receive a plurality of streams (1, 2) each including video and audio;
a selection unit (17, 21, 23) configured to select a predetermined stream from the plurality of streams (1, 2) inputted to the input units (261, 262); and
a synchronous playback unit (27 to 47) configured to, by using an audio playback time of the stream selected by the selection unit (17, 21, 23) as a master, synchronously plays back video of the selected stream and video and audio of a non-selected stream.

2. An information playback apparatus according to claim 1, **characterized in that** the synchronous playback unit (27 to 47) comprises:
a plurality of video decoding units (29, 39) respectively provided for the plurality of streams (1, 2) inputted to the input units (261, 262), and configured to perform a decoding process on video signals included in the respective streams;
a plurality of audio decoding units (33, 43) respectively provided for the plurality of streams (1, 2) inputted to the input units (261, 262), and configured to perform a decoding process on audio signals included in the respective streams; and
a synchronous control unit (36, 37, 46) configured to synchronize output timing of an audio signal outputted from one of the audio decoding units which performs a decoding process on an audio signal of the non-selected stream and video signals outputted from said plurality of video decoding units (29, 39), to output timing of an audio signal from another one of the audio decoding units which performs a decoding process on an audio signal of the stream selected by the selection unit (17, 21, 23).

3. An information playback apparatus according to claim 2, **characterized in that**
said plurality of video decoding units (29, 39) each are configured to compare playback time management information (PTS) included in a video signal to be inputted with time information (STC) generated for each of the video decoding units (29, 39) and for system management, thereby determining output timing of the decoded video signals,
said plurality of audio decoding units (33, 43) each are configured to compare playback time management information (PTS) included in an audio signal to be inputted with time information (STC) generated for each of the audio decoding units (33, 43) and for system management, thereby determining output timing of the decoded audio signals, and
the synchronous control unit (36, 37, 46) is configured to provide, as an offset, a differential (Δstc) between playback time management information (PTS) included in the audio signal of the stream selected by the selection unit (17, 21, 23) and time information (STC) generated for the audio decoding unit which performs a decoding process on the audio signal of the selected stream and for system management, to the time information (STC) generated for each of said plurality of video decoding units (29, 39) and said plurality of audio decoding units (33, 43) and for system management.

4. An information playback apparatus according to claim 3, **characterized in that** the synchronous control unit (36, 37, 46) comprises:
a plurality of calculation units (36, 46) respectively provided for said plurality of audio decoding units (33, 43), and configured to calculate a differential (Δstc) between the playback time management information (PTS) included in an audio signal inputted to a corresponding audio decoding unit and the time information (STC) generated for the audio decoding unit and for system management; and
a differential selection unit (47) configured to select from the differentials (Δstc1, Δstc2) obtained from said plurality of calculation units (36, 46) a differential obtained from the calculation unit provided for the audio decoding unit which performs a decoding process on the audio signal of the stream selected by the selection unit (17, 21, 23) and to provide, as an offset, the selected differential to the time information (STC) generated for each of said plurality of video decoding units (29, 39) and said plurality of audio decoding units (33, 43) and for system management.

5. An information playback apparatus according to claim 3, **characterized in that** the playback time management information included in the audio signals and the video signals is PTS, and the time information generated for each of said plurality of video decoding units (29, 39) and said plurality of audio decoding units (33, 43) and for system management is STC.

6. An information playback method **characterized by** comprising:
a first step (261, 262) of inputting a plurality of streams (1, 2) each including video and audio;
a second step (17, 21, 23, S2, S3) of selecting a predetermined stream from the plurality of streams (1, 2) inputted in the first step (261, 262); and
a third step (27 to 47, S4, S5, S7, S8) of, by using an audio playback time of the stream selected in the second step (17, 21, 23, S2, S3) as a master, synchronously playing back video of the selected stream and video and audio of a non-selected stream.

7. An information playback method according to claim 6, **characterized in that** the third step (27 to 47, S4, S5, S7, S8) comprises:
a fourth step of performing a decoding process on video signals included in the respective streams (1, 2) by video decoding units (29, 39) respectively provided for the plurality of streams (1, 2) inputted in the first step (261, 262);
a fifth step of performing a decoding process on audio signals included in the respective streams (1, 2) by audio decoding units (33, 43) respectively provided for the plurality of streams (1, 2) inputted in the first step (261, 262); and
a sixth step (36, 37, 46, S4, S5, S7, S8) of synchronizing output timing of an audio signal outputted from one of the audio decoding units which performs a decoding process on an audio signal of the non-selected stream and video signals outputted from said plurality of video decoding units (29, 39), to output timing of an audio signal from another one of the audio decoding units which performs a decoding process on an audio signal of the stream selected in the second step (17, 21, 23, S2, S3).

8. An information playback method according to claim 7, **characterized in that**
said plurality of video decoding units (29, 39) each has a step of comparing playback time management information (PTS) included in a video signal to be inputted with time information (STC) generated for each of the video decoding units (29, 39) and for system management, thereby determining output timing of the decoded video signals,
said plurality of audio decoding units (33, 43) each has a step of comparing playback time management information (PTS) included in an audio signal to be inputted with time information (STC) generated for each of the audio decoding units (33, 43) and for system management, thereby determining output timing of the decoded audio signals, and
in the sixth step (36, 37, 46, S4, S5, S7, S8), a differential (Δstc) between playback time management information (PTS) included in the audio signal of the stream selected in the second step (17, 21, 23, S2, S3) and time information (STC) generated for the audio decoding unit which performs a decoding process on the audio signal of the selected stream and for system management is provided, as an offset, to the time information (STC) generated for each of said plurality of video decoding units (29, 39) and said plurality of audio decoding units (33, 43) and for system management.

9. An information playback method according to claim 8, **characterized in that** the sixth step (36, 37, 46, S4, S5, S7, S8) comprises:
a seventh step of calculating, by calculation units (36, 46) respectively provided for said plurality of audio decoding units (33, 43), a differential (Δstc1 and Δstc2) between the playback time management information (PTS) included in an audio signal inputted to a corresponding audio decoding unit (33, 43) and the time information (STC) generated for the audio decoding unit (33, 34) and for system management; and
an eighth step of selecting from the differentials (Δstc1, Δstc2) obtained, in the seventh step, from said plurality of calculation units (36, 46) a differential obtained from the calculation unit provided for the audio decoding unit which performs a decoding process on the audio signal of the stream selected in the second step (17, 21, 23, S2, S3) and providing, as an offset, the selected differential to the time information (STC) generated for each of said plurality of video decoding units (29, 39) and said plurality of audio decoding units (33, 43) and for system management.

10. An information playback method according to claim 8, **characterized in that** the playback time management information included in the audio signals and the video signals is PTS, and the time information generated for each of said plurality of video decoding units (29, 39) and said plurality of audio decoding units (33, 43) and for system management is STC.
